# EUROPÄISCHE PATENTSCHRIFT

(11) **EP 1 110 457 B1**
(45) Veröffentlichungstag und Bekanntmachung des Hinweises auf die Patenterteilung: **03.03.2004**
(21) Anmeldenummer: 00127743.3
(22) Anmeldetag: 19.12.2000
(51) Int. Cl.: A01N 65/00

(54) **Verwendung eines Mittels zur Bekämpfung von Schadorganismen im Pflanzenbau**
Use of an agent for controlling pests in plant culture
Utilisation d'un agent pour contrôler des organismes nuisibles dans la culture de plantes

(30) Priorität: 23.12.1999 DE 19962387
(43) Veröffentlichungstag der Anmeldung: 27.06.2001
(73) Patentinhaber: Wahl, Hans-Jürgen, Dr., 01909 Frankenthal (DE)
(72) Erfinder: Pfannmöller, Monika, Dr., 06110 Halle (DE); Wahl, Hans-Jürgen, Dr., 01909 Frankenthal (DE); Förster, Karin, Dr., 06114 Halle (DE); Diepenbrock, Wulf, Prof.-Dr., 06246 Bad Lauchstädt (DE)
(74) Vertreter: Wablat, Wolfgang, Dr. Dr.

(56) Entgegenhaltungen:
- DD-A- 290 793
- DE-A- 19 530 894
- BUGGE G., HEINER C.: "Investigations on the effectiveness of woad (Isatis tinctoria L.) against wood destroying fungi" FORST UND HOLZ, Bd. 50, Nr. 11, 1995, Seiten 353-354, XP001029634
- PATENT ABSTRACTS OF JAPAN vol. 1998, no. 14, 31. Dezember 1998 (1998-12-31) -& JP 10 245312 A (BEIJING GREENLAND PLANT TECHNOL DEV CO LTD), 14. September 1998 (1998-09-14)
- SEIFERT K ET AL: "INSECTICIDAL AND FUNGICIDAL COMPOUNDS FROM ISATIS TINCTORIA" ZEITSCHRIFT FUER NATURFORSCHUNG. C, A JOURNAL OF BIOSCIENCES, TUEBINGEN, DE, Bd. 49, Nr. 1/2, 1994, Seiten 44-48, XP000872686 ISSN: 0939-5075

## Beschreibung

Die Erfindung betrifft die Verwendung eines Mittels zur Bekämpfung von Schadorganismen, insbesondere von Pilzen, auf oder in Pflanzen, Pflanzenteilen oder Saatgut von landwirtschaftlichen und gärtnerischen Kulturen (Pflanzenbau).

Sie betrifft auch ein Verfahren zur Herstellung dieses Mittels aus pflanzlichen Rohstoffen und seine Verwendung bei speziellen Kulturpflanzen, Pflanzenteilen oder Saatgut.

Bei den Schadorganismen, insbesondere Pilzen, handelt es sich vor allem um Krankheitserreger des Getreides, die sich als samenbürtige Erreger auf der Oberfläche und/oder im Innern der Körner befinden, bzw. als Erreger von Blatt- oder Ährenkrankheiten im Gewebe der Pflanzen anzutreffen sind.

Weit verbreitet ist die Bekämpfung dieser Schadorganismen und Pflanzenkrankheiten durch Einsatz von chemischen Mitteln. Hier kommen beispielsweise chemische Beizmittel auf der Grundlage von Wirkstoffen wie Guazatine, Prochloraz, Imazalil, Carbendazim und Carboxin zum Einsatz (Pflanzenschutzmittelverzeichnis der BRD, Teil I, 1999, Herausgeber: Biologische Bundesanstalt für Land- und Forstwirtschaft).

Auf Grund der nicht bis ins letzte geklärten Rückstandsproblematik für Produkt und Umwelt werden diese Stoffe im ökologischen Landbau nicht eingesetzt.

In der Erprobung befindet sich derzeit die Bekämpfung der genannten Schadorganismen mittels Elektronenbehandlung. Der Nachteil dieses Verfahrens besteht darin, daß durch das Auftreten ionisierender Strahlung Veränderungen des Erbgutes nicht ausgeschlossen werden können.

Sowohl chemische als auch physikalische Behandlungsmethoden wirken sich in den meisten Fällen negativ auf den Keimprozeß aus (Auflaufverzögerung), was wiederum Nachteile für die Ausbildung eines optimalen Pflanzenbestandes, besonders unter ungünstigen Witterungsbedingungen, zur Folge hat. Dies gilt es durch Verwendung natürlicher Mittel zu vermeiden.

Alternativ werden nachwachsende Rohstoffe (Pflanzen) dazu genutzt, um daraus Mittel zur Bekämpfung von Schadorganismen herzustellen. Diese werden dadurch gewonnen, daß der Pflanzenextrakt meist mit organischen Lösungsmitteln gewonnen wird oder zur Anwendung weitere Chemikalien hinzugefügt werden müssen. Beispiele hierfür sind die Lösungsmittel Alkohol, Azeton, Isopropanol, Chloroform, Toluol und Hexan sowie die Anwendung von Emulgatoren (s. DE 197 19 266 A1, DE 44 11 985 A1, DE 43 27 792 A1 und DE 37 31 239 A1).

Nachteilig ist auch hier die Einbeziehung synthetisch gewonnener chemischer Mittel.

Die Aufgabe der Erfindung bestand deshalb im Einsatz eines Mittels zur Bekämpfung von Schadorganismen, insbesondere Pilzen, auf und in Pflanzen, pflanzlichen Teilen oder Saatgut, das nur aus pflanzlichen Rohstoffen besteht und ohne Zusatz von Chemikalien hergestellt werden kann.

Erfindungsgemäß besteht das Mittel aus einer Lösung oder Suspension, die durch Behandeln von Pflanzen der Gattung Isatis, insbesondere der Waidpflanze (Isatis tinctoria), mit einem Überschuß an Wasser - bezogen auf das Trockengewicht der Blätter - während mehrerer Stunden bis einigen Tagen entstanden ist.

Unter dem Begriff Pflanze bzw. Waidpflanze sind sowohl die Pflanzen selbst als auch deren Pflanzenteile wie Stengel, Blätter, Früchte und deren Mischungen in frischer oder getrockneter Form zu verstehen. Vorzugsweise werden die getrockneten Blätter der Pflanzen in feinteiliger Form verwendet.

Für verschiedene Anwendungsfälle kann es vorteilhaft sein, wenn das Mittel weitere Wirk- oder Hilfsstoffe bzw. Pflanzenextrakte enthält. Beispiele hierfür sind: Insektizide Komponenten, Nährstoffe, Tenside, Haftmittel- und Hüllstoffe.

Das erfindungsgemäße Mittel wird hergestellt, indem man
- Blätter von Pflanzen der Gattung Isatis, insbesondere der Waidpflanze (Isatis tinctoria), zerkleinert,
- mit der ein- bis 100fachen Menge ihres Trockengewichts mit Wasser versetzt,
- das Wasser bei Temperaturen zwischen 5 bis 50 °C mehrere Stunden bis einige Tage einwirken läßt und
- das so erhaltene Produkt entweder
   a) abdekantiert bzw. grob filtriert (Lösung) und gegebenenfalls aufkonzentriert oder
   b) mit den Blattbestandteilen homogenisiert (Suspension).

Die Dauer der Einwirkung von Wasser steht im Zusammenhang mit der Höhe der Temperatur, d. h. niedrigere Temperaturen erfordern eine etwas längere Einwirkungszeit. Eine zweckmäßige Verfahrensdurchführung besteht darin, daß der Fermentationsprozeß 2 bis 7 Tage bei Temperaturen zwischen 15 und 25 °C erfolgt.

Beim Einwirken von Wasser auf die Pflanzenteile findet ein Fermentationsprozeß statt, der eine grundlegende Voraussetzung für die Wirksamkeit der Lösung oder Suspension darstellt.

Das erfindungsgemäße Mittel wird alternativ hergestellt, indem man
- Blätter von Pflanzen der Gattung Isatis, insbesondere der Waidpflanze (Isatis tinctoria) mit der ein- bis 100fachen Menge ihres Trockengewichts mit Wasser versetzt,
- kocht und filtriert.

Dieser Extrakt verfügt über keine fungizide Wirksamkeit.

Die wirksame Lösung wird hergestellt, indem man
- den Extrakt nach Abkühlung mit geringen Mengen Waid, einer durch Fermentation gewonnenen Waidlösung oder einer Starterkultur versetzt und
- bei Temperaturen zwischen 5 und 50 °C mehrere Stunden bis einige Tage reagieren läßt.

Abschließend läßt man die Lösung bzw. Suspension auf die Pflanzen, Pflanzenteile oder das Saatgut aufbringen oder einwirken.

Die Vergärung von Blättern des Waides ist durch die Indigogewinnung seit Jahrhunderten bekannt. Die erfindungsgemäße Lösung unterscheidet sich jedoch von bekannten Verfahren (DD 243 823 A3 und DE 195 39 894 A1) dadurch, daß der für die Gewinnung der fungizid wirksamen Stoffe nötige Fermentationsprozeß auch mit trockenem Blattmaterial durchgeführt werden kann. Dies ermöglicht, das Pflanzenmaterial nach der Ernte zu trocknen und erst bei Bedarf der Fermentation zu unterwerfen. Dadurch werden der Arbeitsaufwand verringert und eine ganzjährige Verarbeitung der Waidpflanze erreicht.

Aus dem Beitrag von BUGGE und HEINER in "Forst und Holz", Bd. 50, Nr. 11 (1995), S. 353-354, ist der Einsatz von Waidextrakt beim Schutz von Holz bekannt. Dies vermittelt aber keine Lehre, aus der der Durchschnittsfachmann (Agrarwissenschaftler) Hinweise vermutet, die sich für die Anwendung bei lebenden Organis-men, speziell Saatgut, ableiten lassen. Die Übertragung der fungiziden Wirkung bei Holz auf samenübertragbare Pilze ist überraschend:

Beim Holz geht es um eine Imprägnierung von totem Gewebe, das erhalten bleiben soll. Bei der Behandlung von Saatgut handelt es sich um einen lebenden Organismus, dessen Lebensfähigkeit nicht eingeschränkt werden darf. Die fungizide Wirkung des Waidextrakts wurde nie an einem Pilz getestet, der sich an Saatgut befindet. Es war auch nicht naheliegend, da holzzerstörende und samenbürtige Pilze unterschiedlichen Pilzklassen angehören.

Eine vorteilhafte Herstellungsmethode der Erfindung besteht darin, daß die Blattmasse des Waids nach dem Fermentationsprozeß homogenisiert und gleich als Suspension an das Saatgut angelagert werden kann. (Waidsuspension gemäß Variante b). Da der Waid auch über Eigenschaften als Bindemittel verfügt, ist die Anlagerung an Saatgut dadurch sehr einfach. Die Haftfähigkeit des angelagerten Materials beträgt ohne Verwendung weiterer Hilfsstoffe ca. 90 %.

Weiterhin ist es von Vorteil, wenn die Blätter der Waidpflanze (Isatis tinctoria)-bezogen auf ihr Trockengewicht mit der 5- bis 20fachen Menge Wasser versetzt werden.

Aus technologischen Gründen kann es vorteilhaft sein, wenn während der Herstellung dem Wasser zusätzlich Produkte, die die Struktur und Durchlässigkeit der Zellwände verändem, beigefügt werden.

Zur Anwendung kann das Fermentationsprodukt der Pflanze in die üblichen Formulierungen wie Lösungen, Suspensionen, Pulver, Pasten, Feinstverkapselung in polymeren Stoffen und Hüllmassen für Saatgut überführt werden.

Das erfindungsgemäß verwendete Mittel zur Bekämpfung von Schadorganismen wird insbesondere als Lösung bzw. Suspension zur Saatgutbehandlung (Beizung) eingesetzt. Dabei werden die Samen vorzugsweise besprüht bzw. inkrustiert. Sie können auch anderweitig mit dem Mittel in Kontakt gebracht werden.

Eine weitere erfindungsgemäße Anwendung des Mittels ist die Bekämpfung von Blatt- und Ährenkrankheiten unter Verwendung der Lösung oder Suspension als Spritzmittel.

Besonders wichtige Anwendungsgebiete sind:
- Bekämpfung von Fusarium spp. und Microdochium spp. bei Getreide (Weizen, Roggen, Triticale, Gerste),
- Bekämpfung von Septoria spp. bei Getreide (Weizen, Roggen, Triticale, Gerste),
- Bekämpfung von Tilletia spp. bei Weizen,
- Bekämpfung der Erreger der Brennfleckenkrankheiten bei grobkörnigen Leguminosen.

Die fungizid wirksamen Stoffe befinden sich in der fermentierten Lösung oder Suspension, so daß lediglich die Zugabe von Wasser zum Pflanzenmaterial erforderlich ist und auf synthetische Lösungsmittel aller Art verzichtet werden kann.

Besonders vorteilhaft ist, daß das Mittel die Keimfähigkeit des behandelten Saatgutes nicht beeinträchtigt (phytotoxische Unbedenklichkeit).

Bekannt ist, daß die Waidpflanze für die Herstellung von Anstrichfarben und Holzschutzmitteln (DD 243 823 A3) sowie von Bindemittel für die Papierrestaurierung (DD 289 735 A5) eingesetzt werden kann. Es sind jedoch keine Hinweise bekannt, daß der Färberwaid über fungizide Wirkung bei Saatgut verfügt.

Die Erfindung soll im Folgenden an einigen Beispielen erläutert werden, ohne darauf beschränkt zu sein.

### Beispiel 1

### Herstellung einer Behandlungslösung aus frischen Blättern

Frische Waidblätter mit einem Trockenmassegehalt von 17 % werden grob zerkleinert und im Verhältnis 1 2 mit Leitungswasser versetzt. Nach Aufbewahrung in einem abgedeckten Gefäß im Verlauf von 7 Tagen bei Zimmertemperatur wird die Flüssigkeit durch ein Sieb gegossen und als Lösung zur Saatgutbehandlung verwendet.

### Beispiel 2

### Herstellung einer Spritzbrühe aus trockenen Blättern

Färberwaid wird nach der Ernte getrocknet. Die trockenen Blätter von Isatis tinctoria werden grob zerkleinert in ein Gefäß gegeben und im Verhältnis 1 20 mit Leitungswasser versetzt und das Gefäß abgedeckt. Nach 4 Tagen bei 25 °C wird die Flüssigkeit durch ein Sieb abgegossen und als Lösung zur Spritzbehandlung verwendet.

### Beispiel 3

### Herstellung einer Suspension zur Saatgutbehandlung

Waidblätter werden nach der Trocknung feinvermahlen in ein Gefäß gegeben, im Verhältnis 1 : 10 mit Wasser versetzt und abgedeckt bei 20 °C aufbewahrt. Nach 5 Tagen wird die Blattmasse mit der Flüssigkeit homogenisiert und als Suspension zur Saatgutbehandlung verwendet.

### Beispiel 4

### Zweistufige Herstellung eines Mittels zur Saatgutbehandlung

Frische Waidblätter werden im Verhältnis 1 : 5 mit Wasser versetzt, ca. 20 min gekocht und abgegossen. Der so erhaltene oder auf ein Restvolumen von 10 % eingeengte Extrakt wird mit einer nach Beispiel 1 hergestellten Lösung versetzt (Verhältnis 200 : 1) und drei Tage bei 20 °C inkubiert. Der gewonnene Extrakt wird zur Saatgutbehandlung verwendet.

### Beispiel 5

### Anwendung einer Lösung zur Saatgutbehandlung

Die Lösung wird wie in Beispiel 1 hergestellt und in einer Aufwandmenge von 10 ml/kg gleichmäßig an Weizensaatgut angelagert.

### Beispiel 6

### Anwendung einer Suspension zur Saatgutbehandlung

Eine Suspension nach Beispiel 3 wird nach der Homogenisierung mit etwas Gärflüssigkeit in einer Aufwandmenge von 20 g/kg durch geeignete Verfahren gleichmäßig auf der Saatgutoberfläche des Weizens verteilt. Die nach dem Abtrocknen am nächsten Tag bestimmte Haftfähigkeit beträgt ohne die Verwendung weiterer Hilfsstoffe 90 %.

### Beispiel 7

### Wirksamkeit der erfindungsgemäßen Lösung gegen Microdochium nivale und Septoria nodorum in vitro

Die Wirksamkeit der Lösung gegenüber pilzlichen Schaderregem kann in einem Labortest innerhalb von 1 bis 2 Tagen nachgewiesen werden. Dazu wird Waidagar verwendet, für dessen Bereitung anstelle von Wasser Waidlösung verwendet wird. Das Verhältnis Pflanzenmasse zu Wasser beträgt bei frischen Blättern 1 : 2 und bei getrockneten 1 : 10. Die unfermentierte Waidlösung wird durch 20 min Kochen der frischen oder getrockneten Waidblätter mit Wasser hergestellt, die Herstellung der fermentierten Waidlösung erfolgt entsprechend der Beispiele 1 oder 2. Der Waidagar enthält die gleiche Menge von Potato-Dextrose-Agar (PDA) wie normaler PDA. Auf den Agar werden je 4 drei mm große Stücke der zu untersuchenden Pilzarten (Myzel aus Kultur) aufgesetzt und das Wachstum der Pilzkolonien auf herkömmlichem PDA und auf Waidagar verglichen. Bei schnellwachsenden Pilzen ist bei 20 °C schon nach 24 h der Unterschied mit bloßem Auge sichtbar. Nach 4 Tagen sind die Petrischalen, die den normalen PDA enthalten, meist zugewachsen (Durchmesser der Kolonien mehr als 6 cm). Die Hemmwirkung des Waidagars tritt auf, wenn fermentierte Waidlösung verwendet wird (s. Tabelle 1).

**Tab. 1:**

| Koloniewachstum von Microdochium nivale und Septoria nodorum auf Potato-Dextrose-Agar mit Zusatz von unfermentierter und fermentierter Waidlösung aus tiefgefrorenen (A) oder getrockneten Blättern (B) nach 1 bis 22 Tagen | | | | | | |
|---|---|---|---|---|---|---|
| Variante | Koloniedurchmesser in cm | | | | | |
| | Microdochium nivale | | | Septoria nodorum | | |
| | 1 d | 4 d | 22 d | 1 d | 4 d | 22 d |
| normaler PDA | 0,7 | 5,5 | >6,0 | 0,7 | 3,6 | >6,0 |
| unfermentierte Waidlösung A | 0,8 | 4,3 | >6,0 | 0.7 | 3,1 | >6,0 |
| unfermentierte Waidlösung B | 0,8 | 5,0 | >6,0 | 0.5 | 2,8 | >6,0 |
| fermentierte Waidlösung A | 0,3 | 0,3 | 0,3 | 0,3 | 0,3 | 0,3 |
| fermentierte Waidlösung B | 0,3 | 0,3 | 0,3 | 0,3 | 0,3 | 0,3 |

### Beispiel 8

### Wirksamkeit der erfindungsgemäßen Lösung gegen Fusarium culmorum

Aus den nach Beispiel 1 und 4 hergestellten Lösungen wird Waidagar hergestellt, indem die übliche Menge Potato-Dextrose-Agar (PDA; 39 g/l) an fermentierten Waidextrakt gegeben wird und daraus ein Nährmedium hergestellt wird. Auf die Petrischalen werden je 5 Tropfen mit 10 µl einer Sporenlösung von Fusarium culmorum pipettiert, die ca. 200 Sporen je µl enthalten. Nach Inkubation von 3 Tagen bei 20 °C werden die Sporen mikroskopisch betrachtet und der Durchmesser der Pilzkolonien gemessen. Zur Kontrolle werden die Keimung und das Myzelwachstum auf reinem Potato-Dextrose-Agar verfolgt.

**Tab. 2.**

| Sporenkeimung und Koloniewachstum von Fusarium culmorum nach 3 Tagen auf Potato-Dextrose-Agar mit Zusatz von fermentierter Waidlösung | |
|---|---|
| Variante | Sporenkeimung und Myzelwachstum |
| Kontrolle PDA | Sporen gekeimt, Myzelwachstum ungehemmt, Koloniedurchmesser 2,5 cm |
| Waidagar nach Beispiel 1 | Sporen nicht gekeimt, kein Myzelwachstum |
| Waidagar nach Beispiel 4 | Sporen lysiert, kein Myzelwachstum |

### Beispiel 9

### Nachweis der phytotoxischen Unbedenklichkeit einer Saatgutbehandlung mit Waidlösung oder Suspension

Eine Saatgutbehandlung darf die Keimfähigkeit des Saatgutes nicht beeinträchtigen. Aus diesem Grunde wurde die Keimfähigkeit von Fusarium-infiziertem Saatgut nach der Behandlung mit sehr hohen Aufwandmengen bei normaler Temperatur (20 °C) und mit Vorkühlung bei 8 °C geprüft. In beiden Fällen zeigte sich keine negative Auswirkung der Saatgutbehandlung mit Waidlösung bzw. Suspension des Waids gegenüber der Kontrolle (s. Tabelle 3):

**Tab. 3:**

| Keimfähigkeit von behandeltem Weizensaatgut | | |
|---|---|---|
| Variante | Keimfähigkeit in % | |
| | 7 d bei 20 °C | 7 d bei 8 °C und 5 d bei 20 °C |
| Fusarium-infiziertes Saatgut | 76,25 | 90,25 |
| Behandlung mit 100 ml Lösung/kg | 76,00 | 90,25 |
| Behandlung mit 100 g Suspension/kg | 77,00 | 90,50 |

### Beispiel 10

### Wirksamkeit einer Saatgutbehandlung mit Waidlösung gegen samenbürtige Pilze in vitro

Zum Nachweis der Wirksamkeit der Saatgutbehandlung mit Waidlösung gegenüber samenbürtigen Krankheiten wurde ein Malzagartest angewendet. Dabei wird stark fusarium-infiziertes Weizensaatgut oberflächlich sterilisiert und auf Petrischalen ausgelegt, die Malzextraktagar mit einem Zusatz von Ochsengalle enthalten. An der Anzahl der aus den Karyopsen auswachsenden Pilzkolonien läßt sich die Wirkung ableiten. Da durch die Oberflächensterilisation der Samen (10 min in 13 % Natriumhypochlorit) an die Samen angelagerte Stoffe abgewaschen werden können, wurden die Kömer für diesen speziellen Test je 2 h in die Lösung getaucht, um eine Aufnahme der fungizid wirksamen Substanzen in die Kömer zu erreichen. Es zeigte sich, daß eine Behandlungsvariante eine Reduzierung der Anzahl der Pilzkolonien auf fast die Hälfte bewirkt, während bei einer anderen Variante sogar eine Reduzierung auf 15 % feststellbar ist (s. Tabelle 4).

**Tab. 4:**

| Überprüfung der Wirksamkeit der Saatgutbehandlung mit Waidlösung mit Hilfe des Malzagartests | | | | |
|---|---|---|---|---|
| Variante der Saatgutbehandlung | Anteil Karyopsen mit Pilzkolonien in % nach | | | |
| | 2 Tagen | 3 Tagen | 4 Tagen | 7 Tagen |
| | | | | |
| unbehandelte Kontrolle | 56 | 79 | 79 | 80 |
| Quellung der Samen für 2 h in steriler Lösung | 24 | 37 | 44 | 49 |
| Quellung der Samen für 2 h in unsteriler Lösung | 7 | 12 | 12 | 12 |

## Patentansprüche

1. Verwendung eines Mittels zur Bekämpfung von Pilzen auf oder in Pflanzen, Pflanzenteilen oder Saatgut von landwirtschaftlichen und gärtnerischen Arten, bestehend aus einer Lösung oder Suspension, die durch Behandeln von Pflanzenmaterial der Gattung Isatis mit einem Überschuss an Wasser-bezogen auf das Trockenprodukt der Blätter ― während mehrerer Stunden bis einigen Tagen entstanden ist.

2. Verwendung eines Mittels zur Bekämpfung von Pilzen nach Anspruch 1, **dadurch gekennzeichnet, dass** als Pflanze die Waidpflanze (Isatis tinctoria) eingesetzt wird.

3. Verwendung eines Mittels zur Bekämpfung von Pilzen nach Anspruch 1 und 2, **dadurch gekennzeichnet, dass** es weitere Wirk- oder Hilfsstoffe oder Pflanzenextrakte enthält.

4. Verwendung eines Mittels zur Bekämpfung von samenbürtigen Pilzen auf oder in Saatgut nach einem oder mehreren der Ansprüche 1 bis 3, **dadurch gekennzeichnet, dass** das Saatgut mit Lösung oder Suspension behandelt wird.

5. Verwendung eines Mittels zur Bekämpfung von Pilzen auf oder in Pflanzen und Pflanzenteilen nach einem oder mehreren der Ansprüche 1 bis 4, **dadurch gekennzeichnet, dass** die Waidlösung oder Suspension als Spritzmittel eingesetzt wird.

6. Verwendung eines Mittels zur Bekämpfung von Pilzen nach einem oder mehreren der Ansprüche 1 bis 5, **dadurch gekennzeichnet, dass** es gegen Fusarium spp. und Microdochium spp. bei Getreide (Weizen, Roggen, Triticale, Gerste) eingesetzt wird.

7. Verwendung eines Mittels zur Bekämpfung von Pilzen nach einem oder mehreren der Ansprüche 1 bis 5, **dadurch gekennzeichnet, dass** es gegen Septoria spp. bei Getreide (Weizen, Roggen, Triticale, Gerste) eingesetzt wird.

8. Verwendung eines Mittels zur Bekämpfung von Pilzen nach einem oder mehreren der Ansprüche 1 bis 5, **dadurch gekennzeichnet, dass** es gegen Tilletia spp. bei Weizen eingesetzt wird.

9. Verwendung eines Mittels zur Bekämpfung von Pilzen nach einem oder mehreren der Ansprüche 1 bis 5, **dadurch gekennzeichnet, dass** es gegen Erreger der Brennfleckenkrankheiten bei großkörnigen Leguminosen eingesetzt wird.

10. Verfahren zur Herstellung eines Mittels zur Bekämpfung von Pilzen auf oder in Pflanzen, Pflanzenteilen oder Saatgut, **dadurch gekennzeichnet, dass** man
- Blätter von Pflanzen der Gattung Isatis zerkleinert,
- mit der ein- bis 100fachen Menge ihres Trockengewichts mit Wasser versetzt,
- das Wasser bei Temperaturen zwischen 5 bis 50 °C mehrere Stunden bis einige Tage einwirken läßt und
- das so erhaltene Produkt entweder
a) abdekantiert oder grob filtriert (Lösung) und gegebenenfalls aufkonzentriert oder
b) mit den Blattbestandteilen homogenisiert (Suspension).

11. Verfahren zur Herstellung des Mittels nach Anspruch 10, **dadurch gekennzeichnet, daß** die Einwirkung des Wassers 2 bis 7 Tage bei Temperaturen zwischen 15 und 25 °C erfolgt.

12. Verfahren zur Herstellung eines Mittels zur Bekämpfung von Pilzen auf oder in Pflanzen, Pflanzenteilen oder Saatgut, **dadurch gekennzeichnet, daß** man
- Blätter von Pflanzen der Gattung Isatis mit der ein- bis 100fachen Menge ihres Trockengewichts mit Wasser versetzt,
- kocht und filtriert,
- den Extrakt nach Abkühlung mit geringen Mengen Waid, einer durch Fermentation gewonnenen Waidlösung oder einer Starterkultur versetzt und
- bei Temperaturen zwischen 5 und 50 °C mehrere Stunden bis einige Tage reagieren läßt.

13. Verfahren zur Herstellung des Mittels nach einem oder mehreren der Ansprüche 10 bis 12, **dadurch gekennzeichnet, daß** Blätter der Waidpflanze (Isatis tinctoria) - bezogen auf ihr Trockengewicht mit der 5- bis 20fachen Menge Wasser versetzt werden.

## Claims

1. Use of an agent for controlling fungi on or in plants, plant parts, or seeds of agricultural and horticultural crops consisting of a solution or suspension that developed over several hours up to several days by treating plant material of the Isatis species with a surplus of water in relation to the dry product of the leaves.

2. Use of an agent for controlling fungi according to claim 1 wherein Dyer's Woad (Isatis tinctoria) is used as a plant.

3. Use of an agent for controlling fungi according to claims 1 and 2, **characterized in that** it contains other active ingredients or adjuvants or plant extracts.

4. Use of an agent for controlling fungi transmitted by seeds on or in seeds according to one or several of claims 1 through 3, **characterized in that** the seeds are treated with a solution or suspension.

5. Use of an agent for controlling fungi on or in plants or plant parts according to one or several of claims 1 through 4, **characterized in that** the woad solution or suspension is used as a spraying agent.

6. Use of an agent for controlling fungi according to one or several of claims 1 through 5, **characterized in that** it is used against Fusarium spp. and Microdochium spp. in grains (wheat, rye, triticale, barley).

7. Use of an agent for controlling fungi according to one or several of claims 1 through 5, **characterized in that** it is used against Septoria spp. in grains (wheat, rye, triticale, barley).

8. Use of an agent for controlling fungi according to one or several of claims 1 through 5, **characterized in that** it is used against Tilletia spp. in wheat.

9. Use of an agent for controlling fungi according to one or several of claims 1 through 5, **characterized in that** it is used against pathogens causing anthracnose diseases in large-grain leguminous plants.

10. A method for producing an agent for controlling fungi on or in plants, plant parts, and seeds, **characterized in that**
- leaves of plants of the Isatis species are comminuted,
- intermixed with water in the one- up to 100-fold amount of their dry weight,
- the water is allowed to act for a period of several hours up to several days at temperatures between 5°C and 50°C, and
- the product thus obtained
a) is decanted or passed through a coarse filter (solution) and evaporated, if required, or
b) is homogenized with the leaf components (suspension).

11. The method for producing the agent according to claim 10 wherein the water is allowed to act for 2 to 7 days at temperatures between 15°C and 25°C.

12. A method for producing an agent for controlling fungi on or in plants, plant parts, and seeds, **characterized in that**
- leaves of plants of the Isatis species are intermixed with water in a one- up to 100-fold amount of their dry weight,
- boiled and filtered,
- the extract is intermixed after cooling down with small quantities of woad, a woad solution obtained by fermentation, or a starter culture, and
- allowed to react for a period from several hours to several days at temperatures between 5°C and 50°C.

13. The method for producing the agent according to one or several of claims 10 through 12, **characterized in that** leaves of the Dyer's Woad plant (Isatis tinctoria) are intermixed with the 5- to 20-fold quantity of water as compared to their dry weight.

## Revendications

1. Utilisation d'un agent pour lutter contre des champignons sur ou dans des plantes, des parties de plantes ou des semences de types agricoles et horticoles, constitué d'une solution ou d'une suspension obtenue par traitement de matériel végétal de l'espèce Isatis avec un excédent d'eau - par rapport au produit sec des feuilles - pendant plusieurs heures à quelques jours.

2. Utilisation d'un agent pour lutter contre des champignons selon la revendication 1, **caractérisée en ce que** l'on utilise comme plante le pastel des teinturiers (Isatis tinctoria).

3. Utilisation d'un agent pour lutter contre des champignons selon les revendications 1 et 2, **caractérisé en ce qu'**il contient d'autres substances actives ou auxiliaires ou des extraits de plantes.

4. Utilisation d'un agent pour lutter contre des champignons transmis sur ou dans des semences selon l'une ou plusieurs des revendications 1 à 3, **caractérisée en ce que** la semence est traitée avec une solution ou une suspension.

5. Utilisation d'un agent pour lutter contre des champignons sur ou dans des plantes et des parties de plantes selon l'une ou plusieurs des revendications 1 à 4, **caractérisée en ce que** la solution de pastel ou la suspension est utilisée en tant qu'agent à pulvériser.

6. Utilisation d'un agent pour lutter contre des champignons selon l'une ou plusieurs des revendications 1 à 5, **caractérisée en ce qu'**il est utilisé contre le Fusarium spp. et le Microdochium spp. des céréales (froment, seigle triticale, orge).

7. Utilisation d'un agent pour lutter contre des champignons selon l'une ou plusieurs des revendications 1 à 5, **caractérisée en ce qu'**il est utilisé contre le Septoria spp. des céréales (froments, seigle, triticale, orge).

8. Utilisation d'un agent pour lutter contre des champignons selon l'une ou plusieurs des revendications 1 à 5, **caractérisée en ce qu'**il est utilisé contre le Tilletia spp. des céréales.

9. Utilisation d'un agent pour lutter contre des champignons selon l'une ou plusieurs des revendications 1 à 5, **caractérisée en ce qu'**il est utilisé contre les agents pathogènes des anthracnoses sur les légumineuses à gros grains.

10. Procédé de préparation d'un agent pour lutter contre des champignons sur ou dans des plantes, parties de plantes ou semences, **caractérisé en ce que**
- on broie des feuilles de plantes de l'espèce Isatis,
- on mélange à de l'eau à raison d'une à 100 fois son poids sec,
- on laisse agir l'eau pendant plusieurs heures à quelques jours à des températures entre 5 à 50°C et
- et
a) soit on laisse décanter ou on filtre grossièrement (solution) le produit obtenu et on le concentre le cas échéant ;
b) soit on homogénéise les constituants des feuilles (suspension).

11. Procédé de préparation de l'agent selon la revendication 10, **caractérisé en ce que** l'eau agit 2 à 7 jours à des températures entre 15 et 25 °C.

12. Procédé de préparation d'un agent pour lutter contre des champignons sur ou dans des plantes, parties de plantes ou semences, **caractérisé en ce que**
- on mélange des feuilles de plantes de l'espèce Isatis à de l'eau à raison d'une à 100 fois leur poids sec,
- on fait cuire et on filtre,
- on mélange l'extrait, après refroidissement, à de faibles quantités de pastel, une solution de pastel obtenue par fermentation ou une culture de démarrage
- et on laisse réagir à des températures entre 5 et 50°C pendant plusieurs heures à quelques jours.

13. Procédé de préparation d'un agent selon l'une ou plusieurs des revendications 10 à 12, **caractérisé en ce que** l'on mélange des feuilles du pastel des teinturiers (Isatis tinctoria) - à une quantité d'eau de 5 à 20 fois leur poids sec.
